(19) Europäisches Patentamt
European Patent Office
Office européen des brevets

(11) Publication number: **0 546 564 B1**

(12) **EUROPEAN PATENT SPECIFICATION**

(45) Date of publication of patent specification: **15.03.95**

(51) Int. Cl.⁶: **B32B 25/08**, C08K 5/00

(21) Application number: **92121150.4**

(22) Date of filing: **11.12.92**

(54) **Rubber laminates.**

(30) Priority: **13.12.91 JP 330403/91**

(43) Date of publication of application:
**16.06.93 Bulletin 93/24**

(45) Publication of the grant of the patent:
**15.03.95 Bulletin 95/11**

(84) Designated Contracting States:
**DE FR GB**

(56) References cited:
EP-A- 0 309 730
EP-A- 0 362 459
EP-A- 0 419 218
DE-A- 3 613 188
DE-A- 3 711 791

DATABASE WPIL Week 1587, Derwent Publications Ltd., London, GB; AN 87-104692 & JP-A-62 051 439

DATABASE WPIL Week 3292, Derwent Publications Ltd., London, GB; AN 92-260441 & DE-A-4 202264

(73) Proprietor: **TOYODA GOSEI CO., LTD.**
1, Nagahata,
Ochiai,
Haruhi-cho
Nishikasugai-gun
Aichi-ken (JP)

(72) Inventor: **Okita, Tomoaki, c/o Toyoda Gosei Techn. Ctr.**
30, Nishinomachi,
Kitajima-cho
Inazawa-shi,
Aichi (JP)
Inventor: **Terashima, Kiyomitsu, c/o Toyoda Gosei Techn. Ctr.**
30, Nishinomachi,
Kitajima-cho
Inazawa-shi,
Aichi (JP)
Inventor: **Sugimoto, Masatoshi, c/o Toyoda Gosei Techn. Ctr.**
30, Nishinomachi,
Kitajima-cho
Inazawa-shi,
Aichi (JP)
Inventor: **Kodama, Seiji, c/o Toyoda Gosei Techn. Ctr.**
30, Nishinomachi,
Kitajima-cho
Inazawa-shi,
Aichi (JP)

Inventor: **Kamiya, Ituo**
**52, Hanazono-koso**
**Toyota-shi,**
**Aichi (JP)**
Inventor: **Okada, Masanori**
**11-1-28, Inoue-cho**
**Toyota-shi,**
**Aichi (JP)**
Inventor: **Kozaki, Mamoru**
**8-8-3, Itsutsugaoka**
**Toyota-shi,**
**Aichi (JP)**
Inventor: **Owaki, Masao**
**1-1-5, Kitayamadai,**
**Togo-shi**
**Aichi-gun,**
**Aichi (JP)**


(74) Representative: **Blumbach Weser Bergen**
**Kramer Zwirner Hoffmann Patentanwälte**
**Radeckestrasse 43**
**D-81245 München (DE)**

**Description**

This invention relates to a rubber laminate and particularly to a rubber laminate suitable for use as a rubber part for fuels, such as a fuel hose and a diaphragm of a fuel transfer pump.

For the sake of convenience but not for limitation, the present invention will be described by referring to a fuel rubber hose.

Included in conventional fuel hoses made of a rubber laminate is the hose shown in Fig. 2 which is disclosed in JP-A-62-51439. The hose comprises inner rubber layer 1 and outer rubber layer 3 with reinforcing layer 5 therebetween. Inner rubber layer 1 is made of a vulcanizate of a blend of an acrylic rubber and a vinylidene fluoride resin (hereinafter abbreviated as PVDF) (the blend will hereinafter be abbreviated as AFR) from the standpoint of resistance to gasoline, and outer rubber layer 3 is made of a vulcanized epichlorohydrin (hereinafter abbreviated as CHR) rubber from the standpoint of impermeability to gases and ozone resistance.

With the recent tendency to high performance of rubber hoses for fuels, it has been demanded to increase the adhesion between inner rubber layer 1 (AFR layer) and outer rubber layer 3 (CHR (rubber) layer). In particular, where inner rubber layer 1, reinforcing layer 5, and outer rubber layer 3 are formed almost simultaneously in the same site in a continuous manner (continuous molding process) as described in JP-A-51-100161, the three layers must be bonded only through vulcanization without using any adhesive. In this case, it has been difficult to obtain high adhesion between the inner and outer rubber layers.

An object of the present invention is to provide a rubber laminate comprising an AFR layer and a CHR (rubber) layer with good interlaminar adhesion only resulting from vulcanization bonding.

The present invention relates to a rubber laminate comprising

- a first rubber layer comprising a vulcanizate of a blend of an acrylic rubber and a vinylidene fluoride resin;
- a second rubber layer comprising a vulcanizate of an epichlorohydrin rubber; and
- an intermediate rubber layer for increasing the adhesion between said first and second rubber layers and interposed between said first and second rubber layers,

wherein said intermediate rubber layer comprises a vulcanized acrylic rubber which is obtained by using a vulcanizing system comprising

(1) isocyanuric acid as a vulcanizing agent;
(2) a quaternary ammonium salt as a vulcanizing accelerator; and
(3) diphenylurea as a vulcanization retarder;

and wherein said acrylic rubber of said intermediate rubber layer comprises an alkyl acrylate/2-chloroethyl vinyl ether copolymer (ACM) and/or an alkyl acrylate/acrylonitrile copolymer (ANM).

In another embodiment of the invention, said acrylic rubber of said intermediate rubber layer comprises copolymers comprising

(a) from 30 to 99.9 % by weight of an alkyl acrylate and/or an alkoxy-substituted alkyl acrylate;
(b) from 0.1 to 10 % by weight of a crosslinking monomer; and
(c) from 0 to 70 % by weight of other ethylenically unsaturated compound(s) copolymerizable with (a) and (b).

The invention is further explained by way of the drawings, wherein

Fig. 1 is a perspective view of a fuel rubber hose according to the present invention.

Fig. 2 is a perspective view of a conventional fuel rubber hose.

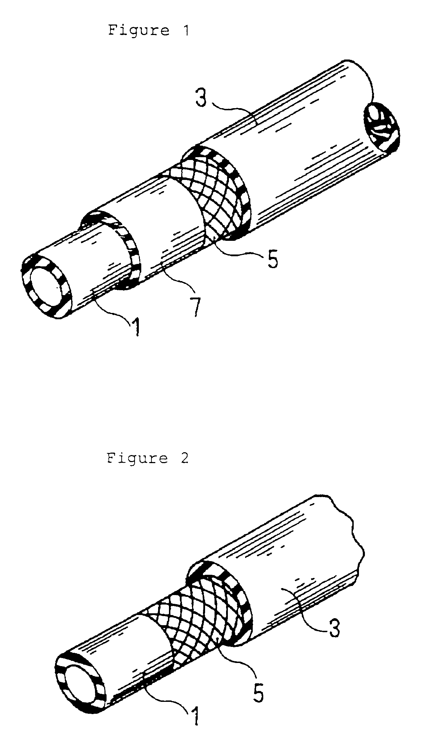

The structure of the rubber laminate according to the present invention is not particularly limited as long as it contains an AFR (rubber) layer and a CHR (rubber) layer. When applied to fuel rubber hoses, the laminate comprises inner rubber layer 1, reinforcing layer 5, and outer rubber layer 3 similar to the conventional fuel rubber hoses and, further, intermediate rubber layer 7 is interposed between inner rubber layer 1 and outer rubber layer 3 as shown in Fig. 1. Reinforcing layer 5 usually comprises spiral coarse-meshed netting of synthetic fiber.

Inner rubber layer 1 comprises a vulcanized AFR (rubber). The AFR which can be used in the present invention is a blend of an acrylic rubber and a vinylidene fluoride resin (PVDF) at a weight ratio of preferably from 95/5 to 40/60 by weight and more preferably from 90/10 to 60/40 by weight.

The acrylic rubber includes an alkyl acrylate/2-chloroethyl vinyl ether copolymer, commonly abbreviated as ACM, and an alkyl acrylate/acrylonitrile copolymer, commonly abbreviated as ANM. ACM is preferred in view of the freeze resistance.

Specific examples of suitable acrylic rubbers include, as disclosed in JP-A-62-51439 supra, copolymers comprising (a) from 30 to 99.9% by weight (preferably from 50 to 99.9% by weight) of an alkyl acrylate and/or alkoxy-substituted alkyl acrylate, (b) from 0.1 to 10% by weight (preferably from 1 to 7% by weight) of a crosslinking monomer, and (c) from 0 to 70% by weight (preferably from 0 to 70% by weight) of other ethylenically unsaturated compound copolymerizable with (a) and (b). The crosslinking monomer (b) generally includes epoxy group-containing ethylenically unsaturated compounds, such as allyl glycidyl ether.

If the PVDF content in AFR is less than 5 parts by weight per 100 parts by weight of AFR, sufficient resistance to gasoline cannot be obtained. If it exceeds 60 parts by weight, the vulcanized AFR would assume excessive resinous properties. A preferred PVDF content ranges from 10 to 40 parts.

Inner rubber layer 1 preferably has a thickness of from 0.5 to 1.0 mm. With a thickness of less than 0.5 mm, it is difficult to retain gasoline resistance. Even if the thickness exceeds 1.0 mm, no further increase in gasoline resistance can be expected.

Outer rubber layer 3 comprises a vulcanized CHR (rubber). The CHR (rubber) is not particularly limited, and any of general-purpose CHR (rubbers) including an epichlorohydrin homopolymer, commonly abbreviated as CO, and an epichlorohydrin/ethylene oxide copolymer, commonly abbreviated as ECO, can be employed.

Intermediate rubber layer 7 comprises a vulcanized acrylic rubber. The same acrylic rubbers as used in the above-mentioned AFR can be used for the intermediate rubber layer.

The vulcanizing system to be used for the acrylic rubber comprises (1) isocyanuric acid as a vulcanizing agent, (2) a quaternary ammonium salt as a vulcanization accelerator, and (3) diphenylurea as a vulcanization retarder. If desired, the vulcanizing system may further contain a general-purpose vulcanization accelerator and/or a general-purpose vulcanization retarder.

Examples of suitable quaternary ammonium salts as component (2) include tetraethylammonium bromide, tetrabutylammonium chloride, tetrabutylammonium bromide, tetrabutylammonium iodide, n-dodecyltrimethylammonium bromide, cetyldimethylbenzylammonium chloride, methylcetyldibenzylammonium bromide, cetyldimethylethylammonium bromide, octadecyltrimethylammonium bromide, cetylpyridinium chloride, cetylpyridinium bromide, 1,8-diazabicyclo[5,4,0]undecene-7-methylammonium methsulfate, 1,8-diazabicyclo[5,4,0]undecene-7-benzylammonium chloride, cetyltrimethylammonium alkylphenoxypoly(ethyleneoxy)ethyl phosphate, cetylpyridinium iodide, cetylpyridinium sulfate, tetraethylammonium acetate, trimethylbenzylammonium benzoate, trimethylbenzylammonium p-toluenesulfonate, and trimethylbenzylammonium borate, with octadecyltrimethylammonium bromide being preferred.

The components (1) to (3) are compounded at a generally employed ratio. For example, the vulcanizing system preferably comprises from 0.5 to 2.0 PHR (parts per hundred parts of rubber) (and particularly from 0.5 to 1.5 PHR) of component (1), from 1.0 to 4.0 PHR (and particularly from 1.5 to 3.0 PHR) of component (2), and from 0.5 to 2.0 PHR (and particularly from 1.0 to 2.0 PHR) of component (3).

The intermediate rubber layer preferably has a thickness of from 0.2 to 1.0 mm. If the thickness is less than 0.2 mm, the intermediate rubber layer does not exert sufficient adhesion. A thickness exceeding 1.0 mm is not needed for affording guarantee of sufficient adhesion.

Each of the AFR, CHR (rubber) and acrylic rubber is compounded with a reinforcing agent (e.g., carbon black), a plasticizer, a processing aid, a vulcanization accelerator, a vulcanizing agent, an antioxidant, and other various additives and kneaded by use of a roll, a Banbury mixer, an intermixer, etc. to prepare a rubber compound.

The rubber compounds are each extruded from the respective extruders assembled with an apparatus for forming a reinforcing layer (e.g., a spiral apparatus), or are each extruded almost simultaneously by means of an apparatus to be used in the above-described continuous molding process, to form the respective lamina constituting the reinforced rubber hose.

The reinforcing layer is usually spiral netting fabricated of nylon yarns or polyester yarns having been treated with a resorcin-formalin latex adhesive by means of a spiral apparatus. In using a continuous extrusion apparatus, untreated reinforcing yarns may be used for the reinforcing layer when the extruding type-continuous molding apparatus is used.

According to the present invention, the acrylic rubber layer combined with the above-mentioned specific vulcanizing system provides satisfactory adhesion by vulcanization between the AFR layer and the CHR (rubber) layer as demonstrated in Test Example hereinafter described.

Further, use of the acrylic rubber layer combined with the specific vulcanizing system makes it feasible to produce the inner rubber layer, reinforcing layer and outer rubber layer continuously and almost simultaneously in the same site, thereby providing high quality rubber hoses with high productivity.

The present invention is now illustrated in Test Example, but it should be understood that the present invention is not deemed to be limited thereto. All the parts and ratios are by weight unless otherwise indicated.

TEST EXAMPLE

1) Adhesion Test:

1-1) Initial Adhesion:

The following components were kneaded to prepare an AFR, ANM-1, ANM-2, ANM-3, CHR (rubber) (ECO), or chlorosulfonated polyethylene (CSM) compound.

| AFR Compound: | |
|---|---|
| ANM/PVDF (80/20) | 100 parts |
| HAF carbon black | 40 parts |
| Stearic acid | 1 part |
| Plasticizer | 25 parts |
| Hexamethylenediamine carbamate | 1 part |
| 1-o-Tolylbiguanide | 2.8 parts |

| ANM Compound: | | | |
|---|---|---|---|
| | ANM-1 (part) | ANM-2 (part) | ANM-3 (part) |
| ANM | 100 | 100 | 100 |
| HAF carbon black | 80 | 80 | 80 |
| Plasticizer | 35 | 35 | 35 |
| Stearic acid (processing aid) | 1 | 5 | 1 |
| Isocyanuric acid | 1.0 | - | - |
| Octadecyltrimethylammonium bromide (i.e., a quaternary ammonium salt) | 2 | - | - |
| Diphenylurea | 1 | - | - |
| Alkylbenzenesulfonic acid | - | 2 | - |
| Hexamethylenediamine carbamate | - | - | 1 |

| CHR (Rubber) Compound: | |
|---|---|
| ECO | 100 parts |
| MAF carbon black | 55 parts |
| Ether ester type plasticizer | 15 parts |
| Processing aid | 2 parts |
| Nickel dimethyldithiocarbamate (antioxidant) | 1 part |
| MgO | 3 parts |
| $CaCO_3$ | 5 parts |
| 2,4,6-Trimercapto-s-triazine (vulcanizing agent) | 1.2 parts |

| CSM Compound: | |
|---|---|
| Hypalon 40 (produced by E.I. du Pont de Nemours & Co. Ind.) | 100 parts |
| MgO | 5 parts |
| SRF carbon black | 55 parts |
| Sebacate type plasticizer | 25 parts |
| Processing aid | 2 parts |
| Pentaerythritol | 3 parts |
| Nickel dimethylcarbamate (vulcanizing agent) | 1 part |
| Pentamethylenethiuram tetrasulfide | 2 parts |

Each rubber compound was sheeted by means of a calendering roll to a thickness of about 2 mm, and cut to determined size.

A combination of two of the resulting sheets as shown in Table 1 were laminated, and the laminate was subjected to vulcanizing molding at 160°C for 60 minutes. After being allowed to stand for 24 hours, the vulcanized laminate was subjected to a peeling test (peel angle: 180°; rate of pulling: 50 mm/min).

1-2) Adhesion After Immersion in Fuel:

A vulcanized rubber laminate prepared in the same manner as described above was immersed in gasoline LFG-II at 40°C for 48 hours, allowed to stand at room temperature for 1 day, dried under vacuum condition, at 80°C for 8 hours, and then subjected to the same 180° peeling test.

The results of the adhesion tests are shown in Table 1.

TABLE 1

| | Adhesive Strength (kgf/2.54 cm) | | |
|---|---|---|---|
| | AFR Sheet | | ECO Sheet |
| | Initial | After Immersion in Fuel | Initial |
| ANM-1 Sheet | 13.8 (rubber failure) | 11.9 (rubber failure) | 15.6 (rubber failure) |
| ANM-2 Sheet | 6.7 (interlaminar separation) | 3.1 (interlaminar separation) | 15.2 (interlaminar separation) |
| ANM-3 Sheet | 11.4 (rubber failure) | 9.0 (rubber failure) | 12.6 (rubber failure) |
| ECO Sheet | 10.5 (rubber failure) | 3.1 (interlaminar separation) | - |
| CSM Sheet | -2.8 (interlaminar separation) | - | 4.7 (interlaminar separation) |

As is apparent from the results in Table 1, the combination of the AFR layer or ECO layer with the ANM-1 layer according to the present invention exhibits sufficient interlaminar adhesive strength both in the initial stage and after immersion in a fuel oil, whereas other combinations of layers, i.e., the combination of the AFR layer or ECO layer with the ANM-2 or -3 layer, which uses a different vulcanizing system from that of ANM-1, the ECO layer, or the CSM layer, have poor interlaminar bonding.

2) Reinforcing Yarn Deterioration Test:

Unvulcanized rubber sheets were prepared in the same manner as described above. The ECO sheet and each of the ANM-1, ANM-2, ANM-3, ECO and AFR sheets were laminated with untreated polyethylene terephthalate (PET) yarn (initial strength: 3.8 kgf) being inserted therebetween, subjected to vulcanization by compression molding at 160°C for 60 minutes in a mold. The yarn was taken out, and the fiber strength was measured.

The results obtained are shown in Table 2 below. In Table 2, the values in the parentheses are percent retention of the fiber strength.

6

TABLE 2

| Fiber Strength (kgf) [N] | | | | | |
|---|---|---|---|---|---|
| | ANM-1 Sheet | ANM-2 Sheet | ANM-3 Sheet | ECO Sheet | AFR Sheet |
| ECO Sheet | 3.5 [34.3] (93%) | 2.3 [22.54] (61%) | 0.8 [7.84] (21%) | 3.4 [33.32] (84%) | 1.6 [15.68] (58%) |

As is apparent from the results in Table 2, the PET yarn sandwiched in between the ECO layer and the ANM-1 layer according to the present invention has a high strength retention after vulcanization of the rubber layers, and is substantially equal to or higher than that obtained in the case of being sandwiched in between ECO layers, and far higher than those obtained in the case of other combinations of rubber layers. In other words, the combination of rubber layers according to the present invention is less accelerative on deterioration of reinforcing yarns than others.

3) Vulcanization Characteristics of ANM and Physical Properties of Vulcanized ANM:

Measurements were made in accordance with JIS K 6300 and JIS K 6301. The results of the measurements are shown in Table 3 below.

TABLE 3

| | ANM-1 | ANM-2 | ANM-3 |
|---|---|---|---|
| Mooney Scorch (145°C): | | | |
| MV | 55.4 | 53.9 | 55.7 |
| $t_5$ (min) | 4.2 | 3.1 | 3.23 |
| $t^\Delta_{30}$ (min) | 2.0 | 7.46 | 1.57 |
| Charastometer (160°C): | | | |
| $M_L$ (kg·cm) | 4.5 | 3.8 | 4.2 |
| $M_H$ (kg·cm) | 12.9 | 14.1 | 18.2 |
| $T_{10}/T_{90}$ (min) | 2.8/25.9 | 2.1/32.1 | 4.4/19.5 |
| Physical Properties in Original State (JIS K 6301): | | | |
| $H_S$ (JIS-A) | 62 | 63 | 67 |
| $T_B$ (kg/cm$^2$) | 92 | 104 | 108 |
| $E_B$ (%) | 400 | 310 | 310 |
| $M_{100}$ (kg/cm$^2$) | 26 | 23 | 31 |
| Heat Resistance (120°C x 70 h): | | | |
| $\Delta H_S$ (point) | +6 (68) | +6 (69) | +11 (78) |
| $\Delta T_B$ (%) | +14 (105) | -3 (101) | +5 (113) |
| $\Delta E_B$ (%) | -45 (220) | -42 (180) | -94 (160) |
| $\Delta M_{100}$ (%) | +96 (51) | +165 (61) | +129 (70) |

/To be cont'd.

8

## TABLE 3 (cont'd.)

|  | ANM-1 | ANM-2 | ANM-3 |
|---|---|---|---|
| Resistant to Fuels (Fuel D; 40°C x 48 h): |  |  |  |
| $\Delta H_S$ (point) | -25 (37) | -24 (39) | -28 (39) |
| $\Delta T_B$ (%) | -53 (43) | -56 (46) | -55 (49) |
| $\Delta E_B$ (%) | -50 (200) | -48 (160) | -52 (150) |
| $\Delta M_{100}$ (%) | -15 (17) | -15 (20) | -26 (23) |
| $\Delta V$ (%) | +26.4 | +24.9 | +25.2 |
| Compressive Set (120°C): |  |  |  |
| 22 h.    (°C) | 12 | 29 | 28 |
| 70 h.    (°C) | 21 | 41 | 44 |
| Crack Growth (Fuel D; 40°C): |  |  |  |
| 50% Extension (s) | 128 | 48 | 69 |
| Low-temperature Brittleness by Impact (°C): |  |  |  |
| No-failure Point | -40 | -38 | -38 |
| Brittle Point | -42.6 | -40.3 | -40.6 |
| Total Failure Point | -46 | -44 | -44 |

That results in Table 3 prove that ANM-1 to be used as an intermediate rubber layer, when evaluated as a whole, is superior to ANM-2 or -3 containing the other vulcanizing system.

Accordingly, the rubber laminate of the present invention exhibits sufficient interlaminar adhesion obtained by vulcanizing bonding enough for use as a fuel rubber part, such as a fuel rubber hose fixed to the part undergoing vibration in, for example, the engine housing of automobiles. The present invention thus provides fuel rubber parts comprising the rubber laminate with high gasoline resistance and abrasion resistance.

**Claims**

1. A rubber laminate comprising
   - a first rubber layer comprising a vulcanizate of a blend of an acrylic rubber and a vinylidene fluoride resin;
   - a second rubber layer comprising a vulcanizate of an epichlorohydrin rubber; and
   - an intermediate rubber layer for increasing the adhesion between said first and second rubber layers and interposed between said first and second rubber layers,
   wherein said intermediate rubber layer comprises a vulcanized acrylic rubber which is obtained by using a vulcanizing system comprising
   (1) isocyanuric acid as a vulcanizing agent;
   (2) a quaternary ammonium salt as a vulcanizing accelerator; and

9

(3) diphenylurea as a vulcanization retarder;

and wherein said acrylic rubber of said intermediate rubber layer comprises an alkyl acrylate/2-chloroethyl vinyl ether copolymer (ACM) and/or an alkyl acrylate/acrylonitrile copolymer (ANM).

2. A rubber laminate comprising
   - a first rubber layer comprising a vulcanizate of a blend of an acrylic rubber and a vinylidene fluoride resin;
   - a second rubber layer comprising a vulcanizate of an epichlorohydrin rubber; and
   - an intermediate rubber layer interposed between said first and second rubber layers,

wherein said intermediate rubber layer comprises a vulcanized acrylic rubber which is obtained by using a vulcanizing system comprising
   (1) isocyanuric acid as a vulcanizing agent;
   (2) a quaternary ammonium salt as a vulcanizing accelerator; and
   (3) diphenylurea as a vulcanization retarder;

and wherein said acrylic rubber of said intermediate rubber layer comprises copolymers comprising
   (a) from 30 to 99.9 % by weight of an alkyl acrylate and/or an alkoxy-substituted alkyl acrylate;
   (b) from 0.1 to 10 % by weight of a crosslinking monomer; and
   (c) from 0 to 70 % by weight of other ethylenically unsaturated compound(s) copolymerizable with (a) and (b).

3. A rubber laminate according to claim 1 or claim 2, wherein said laminate further comprises a reinforcing layer of synthetic fiber.

4. A rubber laminate according to any of claims 1 to 3, wherein said quaternary ammonium salt in the vulcanizing system for the intermediate layer is octadecyltrimethylammonium bromide.

5. A rubber laminate according to any of claims 1 to 4, wherein said intermediate rubber layer has a thickness of from 0.2 to 1.0 mm.

**Patentansprüche**

1. Kautschuk-Laminat, umfassend
   - eine erste Kautschuk-Schicht, die ein Vulkanisat aus einer Mischung aus einem Acryl-Kautschuk und einem Vinylidenfluorid-Harz umfaßt;
   - eine zweite Kautschuk-Schicht, die ein Vulkanisat aus einem Epichlorhydrin-Kautschuk umfaßt; und
   - eine Zwischen-Kautschuk-Schicht zur Erhöhung der Haftung der ersten und der zweiten Kautschuk-Schicht, die zwischen der ersten und der zweiten Kautschuk-Schicht angeordnet ist,

worin die Zwischen-Kautschuk-Schicht einen vulkanisierten Acryl-Kautschuk umfaßt, der erhalten wird durch Verwendung eines Vulkanisationssystems, das umfaßt:
   (1) Isocyanursäure als Vulkanisiermittel
   (2) ein quaternäres Ammoniumsalz als Vulkanisierbeschleuniger; und
   (3) Diphenylharnstoff als Vulkanisierverzögerer;

und worin der Acryl-Kautschuk der Zwischen-Kautschuk-Schicht ein Copolymer aus Alkylacrylat und 2-Chlorethylvinylether (ACM) und/oder ein Copolymer aus Alkylacrylat und Acrylnitril (ANM) umfaßt.

2. Kautschuk-Laminat, umfassend
   - eine erste Kautschuk-Schicht, die ein Vulkanisat aus einer Mischung aus einem Acryl-Kautschuk und einem Vinylidenfluorid-Harz umfaßt;
   - eine zweite Kautschuk-Schicht, die ein Vulkanisat aus einem Epichlorhydrin-Kautschuk umfaßt; und
   - eine Zwischen-Kautschuk-Schicht, die zwischen der ersten und der zweiten Kautschuk-Schicht angeordnet ist,

worin die Zwischen-Kautschuk-Schicht einen vulkanisierten Acryl-Kautschuk umfaßt, der erhalten wird durch Verwendung eines Vulkanisationssystems, das umfaßt:
   (1) Isocyanursäure als Vulkanisiermittel
   (2) ein quaternäres Ammoniumsalz als Vulkanisierbeschleuniger; und

EP 0 546 564 B1

(3) Diphenylharnstoff als Vulkanisierverzögerer;

und worin der Acryl-Kautschuk der Zwischen-Kautschuk-Schicht Copolymere umfaßt, die umfassen:

(a) 30 bis 99,9 Gewichtsprozent eines Alkylacrylats und/oder eines Alkoxy-substituierten Alkylacrylats;

(b) 0,1 bis 10 Gewichtsprozent eines vernetzenden Monomers; und

(c) 0 bis 70 Gewichtsprozent einer oder mehrerer anderer ethylenisch ungesättigter Verbindung(en), die mit (a) und (b) copolymerisierbar ist/sind.

3. Kautschuk-Laminat nach Anspruch 1 oder Anspruch 2, worin das Laminat außerdem eine Verstärkungsschicht aus einer synthetischen Faser umfaßt.

4. Kautschuk-Laminat nach einem der Ansprüche 1 bis 3, worin das quaternäre Ammoniumsalz in dem Vulkanisationssystem für die Zwischenschicht Octadecyltrimethylammoniumbromidist.

5. Kautschuk-Laminat nach einem der Ansprüche 1 bis 4, worin die Zwischen-Kautschuk-Schicht einer Dicke von 0,2 bis 1,0 mm aufweist.

**Revendications**

1. Stratifié de caoutchouc comprenant

- une première couche de caoutchouc comprenant un vulcanisat d'un mélange d'un caoutchouc acrylique et d'une résine fluorure de vinylidène ;

- une seconde couche de caoutchouc comprenant un vulcanisat d'un caoutchouc épichlorhydrine ; et

- une couche de caoutchouc intermédiaire pour augmenter l'adhérence entre ladite première couche et la seconde couche de caoutchouc et qui est intercalée entre ladite première et ladite seconde couche de caoutchouc, dans lequel ladite couche de caoutchouc intermédiaire comprend un caoutchouc acrylique vulcanisé qu'on obtient en utilisant un système de vulcanisation comprenant

(1) de l'acide isocyanurique comme agent vulcanisant ;

(2) un sel d'ammonium quaternaire comme accélérateur de vulcanisation ; et

(3) de la diphénylurée comme retardateur de vulcanisation ; et dans lequel ledit caoutchouc acrylique de ladite couche intermédiaire comprend un copolymère acrylate d'alkyle/éther 2-chloroéthylvinylique (ACM) et/ou un copolymère acrylate d'alkyle/acrylonitrile (ANM).

2. Stratifié de caoutchouc comprenant

- une première couche de caoutchouc comprenant un vulcanisat d'un mélange d'un caoutchouc acrylique et d'une résine fluorure de vinylidène ;

- une seconde couche de caoutchouc comprenant un vulcanisat de caoutchouc épichlorhydrine ; et

- une couche de caoutchouc intermédiaire intercalée entre ladite première et ladite seconde couche de caoutchouc,

dans lequel ladite couche de caoutchouc intermédiaire comprend un caoutchouc acrylique vulcanisé qu'on obtient en utilisant un système vulcanisant comprenant

(1) de l'acide isocyanurique comme agent vulcanisant ;

(2) un sel d'ammonium quaternaire comme accélérateur de vulcanisation ; et

(3) de la diphénylurée comme retardateur de vulcanisation ; et dans lequel ledit caoutchouc acrylique de ladite couche intermédiaire comprend des copolymères comprenant

(a) de 30 à 99,9 % en poids d'un acrylate d'alkyle et/ou d'un acrylate d'alkyle alcoxy substitué ;

(b) de 0,1 à 10 % en poids d'un monomère réticulant ; et

(c) de 0 à 70 % en poids d'un ou d'autres composé(s) éthyléniquement insaturé(s) copolymérisable(s) avec (a) et (b).

3. Stratifié de caoutchouc selon la revendication 1 ou la revendication 2, dans lequel ledit stratifié comprend en outre une couche de renfort en fibre synthétique.

4. Stratifié de caoutchouc selon l'une quelconque des revendications 1 à 3, dans lequel ledit sel d'ammonium quaternaire dans le système de vulcanisation de la couche intermédiaire est le bromure d'octadécyltriméthylammonium.

11

5. Stratifié de caoutchouc selon l'une quelconque des revendications 1 à 4, dans lequel ladite couche d'un caoutchouc intermédiaire a une épaisseur comprise entre 0,2 et 1,0 mm.

Figure 1

Figure 2